# EUROPÄISCHE PATENTSCHRIFT

(11) **EP 0 754 839 B1**
(45) Veröffentlichungstag und Bekanntmachung des Hinweises auf die Patenterteilung: **23.09.1998**
(21) Anmeldenummer: 96107847.4
(22) Anmeldetag: 17.05.1996
(51) Int. Cl.: F01L 1/344

(54) **Stellvorrichtung zur relativen Winkelverstellung einer angetriebenen Welle, insbesondere Nockenwelle einer Brennkraftmaschine**
Actuating device for adjusting the relative angular position of a driven shaft, especially of an internal combustion engine camshaft
Dispositif de commande pour le réglage de la phase angulaire d'un arbre entraîné, en particulier de l'arbre à cames d'un moteur à combustion interne

(30) Priorität: 15.07.1995 DE 19525836
(43) Veröffentlichungstag der Anmeldung: 22.01.1997
(73) Patentinhaber: Bayerische Motoren Werke Aktiengesellschaft, 80788 München (DE)
(72) Erfinder: Halmanseger, Leonhard, 83059 Kolbermoor (DE); Klostermeier, Heinrich, 83104 Tuntenhausen (DE); Kaindl, Wolfgang, 85368 Moosburg (DE)

(56) Entgegenhaltungen:
- EP-A- 0 147 209
- DE-A- 3 605 679
- DE-A- 4 218 082
- DE-A- 4 417 959
- PATENT ABSTRACTS OF JAPAN vol. 016, no. 328 (M-1281), 16.Juli 1992 & JP-A-04 094404 (TOYOTA MOTOR CORP), 26.März 1992,

## Beschreibung

Die Erfindung geht gemäß dem Oberbegriff des Patentanspruches 1 von der japanischen Patent-Offenlegungsschrift Showa 63-131808 aus.

Dieses Dokument zeigt in Figur 2 ein Ausführungsbeispiel einer gattungsgemäßen Stellvorrichtung mit einer Lagerbuchse, die über ihre nahezu gesamte axiale Erstreckung auf einem Wellen-Endabschnitt zentriert ist. Diese relativ lange Zentrierverbindung ist für die Montage solcher Stellvorrichtungen wenig geeignet, die bereits mit aufgelegter Kette oder aufgelegtem Zahnriemen an einer Welle montiert werden, wobei die Kette oder der Zahnriemen schon mit dem Abtriebsrad einer weiteren Welle in Eingriff steht.

Eine für eine derartige Montage aufgrund einer relativ kurzen Zentrierverbindung geeignete Stellvorrichtung zur relativen Winkelverstellung einer angetriebenen Welle ist beispielsweise aus der DE-C 40 29 849 bekannt. Bei dieser bekannten Stellvorrichtung mit einem doppelseitig hydraulisch beaufschlagbaren Verstellkolben erscheint als nachteilig die Ausbildung eines Fluidweges zu einer der Druckkammem mittels einer Durchbohrung der die Stellvorrichtung mit der angetriebenen Welle verbindenden Zentralschraube.

Soll eine derartige, aufwendige Durchbohrung einer relativ langen Zentralschraube vermieden werden, kann sich für eine über eine kurze Zentrierverbindung zentral verschraubte Stellvorrichtung mit insbesondere in beiden Verstellrichtungen hydraulisch beaufschlagbaren Verstellkolben eine bauaufwendige Anordnung und Ausbildung der Hydraulikkanäle ergeben, wie dies z.B. die aus der DE-A 42 18 082 bekannte Stellvorrichtung zeigt.

Der Erfindung liegt die Aufgabe zugrunde, eine gattungsgemäße Stellvorrichtung so zu verbessem, daß bei einfachem Aufbau der Vorrichtung und sicherer Zentrierung eine vereinfachte Anordnung der Hydraulikkanäle erzielt ist.

Diese Aufgabe ist mit dem Patentanspruch 1 gelöst. Der Vorteil der Erfindung ist, daß mit der radial einwärts in eine zentrische Ausnehmung des Wellen-Endabschnittes verlegten Zentrierung der Lagerbuchse der dadurch im stimseitigen Umfangsbereich des Wellen-Endabschnittes geschaffene Teil dieses Endabschnittes der Anordnung wellenseitiger sowie der Anbindung vorrichtungsseitig ausgebildeter Hydraulikkanäle dient, wobei mit dieser erfindungsgemäßen Ausbildung ein einfacher und kompakter Aufbau der Stellvorrichtung erzielt ist bzw. beibehalten werden kann.

Vorteilhafte Ausgestaltungen der Erfindung sind in den Unteransprüchen beschrieben. Insbesondere beschreibt der für mehrere Ausbildungsvarianten der Stellvorrichtung gültige Anspruch 2 eine Möglichkeit der Schaffung eines wellenseitigen Verteilkanals durch die Zuordnung von Welle und entsprechend angepaßtem Lagerring mit dem Vorteil einfacher Gestaltung der vorgenannten Teile bei einfacher, mediumsführender Anbindung der erfindungsgemäß vorrichtungsseitig gestalteten Hydraulikkanäle an den wellenseitigen Verteilkanal.

Die Erfindung ist anhand von in der Zeichnung dargestellten Ausführungsbeispielen beschrieben. Es zeigen
- Figuren 1, 1' und 2, 2': jeweils eine Stellvorrichtung in einem hälftigen Längsschnitt und in einem Querschnitt mit im jeweiligen Lagerring angeordneten Verbindungskanälen,
- Figuren 3, 3' und 4, 4': jeweils eine im hälftigen Längsschnitt und im Querschnitt gezeigte Stellvorrichtung mit in der jeweiligen Lagerbuchse angeordneten Verbindungskanälen.

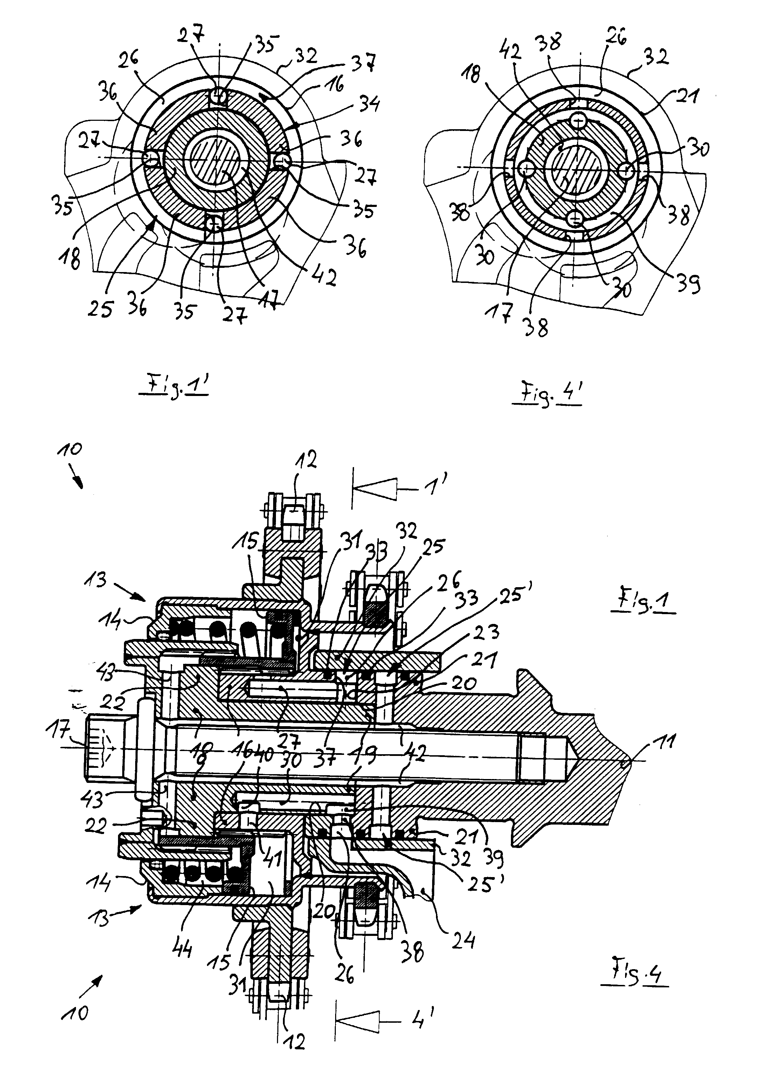

Die in den Figuren 1 bis 4 in hälftigen Längsschnitten dargestellten Stellvorrichtungen 10 sind grundsätzlich von gleichem Aufbau, so daß gleiche Teile mit identischen Bezugszeichen belegt sind. Jede Stellvorrichtung 10 zur Winkelverstellung einer angetriebenen Nockenwelle 11 relativ zu einer Kurbelwelle einer nicht gezeigten Brennkraftmaschine weist ein Ketten- oder Zahnriemenrad 12 in einem antriebseitigen Teil 13 auf, der über einen an einem Steuergehäuse 14 zur Aufnahme eines hydraulisch gesteuert verstellbaren Verstellkolbens 15 angeordneten Lagerring 16 auf einer mit der Nockenwelle 11 mittels einer Zentralschraube 17 drehfest verbundenen Lagerbuchse 18 drehwinkelbeweglich angeordnet ist. Kombinierte Gerad-/Schräg-Verzahnungen an Lagerring 16 und Lagerbuchse 18 in Verbindung mit korrespondierenden Verzahnungen an einer mit dem Verstellkolben 15 verbundenen Hülse dienen der Drehwinkelverstellbarkeit der Nockenwelle 11 relativ zum antriebseitigen Teil 13.

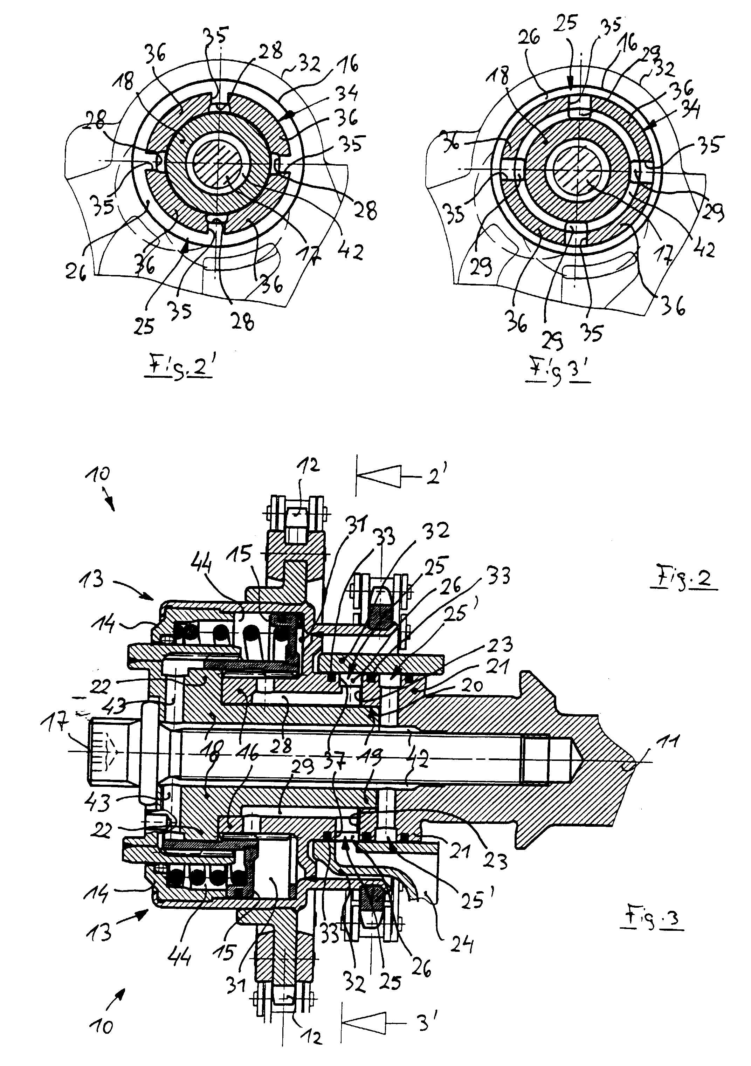

Wie aus den Figuren 1 bis 4 ersichtlich, ist die Lagerbuchse 18 mittels einer über den jeweiligen Lagerring 16 hinaus axial sicher streckenden Verlängerung 19 in einer zentrischen Aufnahme 20 im Endabschnitt 21 der Nockenwelle 11 zentriert und mittels der Zentralschraube 17 reibschlüssig drehfest angeordnet. Weiter ist ersichtlich, daß der einerseits auf der Lagerbuchse 18 mittels eines Flansches 22 axial gesicherte Lagerring 16 andererseits gegen eine Stirnseite 23 des Wellen-Endabschnittes 21 anschlägt. Ein im Endabschnitt 21 vorgesehener, mit einer steuerbaren Hydraulikleitung 24 verbundener Verteilkanal 25 ist als eine dem Lagerring 16 im Wellen-Endabschnitt 21 benachbart angeordnete, umlaufende Außen-Umfangsnut 26 gestaltet, die gemäß Figuren 1 und 2 über im Lagerring 16 oder Figuren 3 und 4 über in der Lagerbuchse 18 angeordnete Verbindungskanäle 27, 28 bzw. 29, 30 mit einer vom Verstellkolben 15 begrenzten Druckkammer 31 in Verbindung steht.

Bezüglich der näheren Ausgestaltung der Stellvorrichtung 10 nach den Figuren 1 mit 3 untergreift der Lagerring 16 abschnittsweise eine den Endabschnitt 21 der Nockenwelle 11 umschließende Abdeckung 32, wobei der Lagerring 16 in dem die Abdeckung 32 untergreifenden Abschnitt mit einem Dichtring 33 ausgerüstet ist. An den den Dichtring 33 tragenden Abschnitt des Lagerringes 16 schließt sich ein im Durchmesser kleinerer Fortsatz 34 an, über den der drehwinkelbewegliche Lagerring 16 gegen die Stirnseite 23 der Nockenwelle 11 bzw. des Wellen-Endabschnittes 21 anschlägt. Der rohrartige Fortsatz 34 ist mittels Radialschlitze 35 in Ringsegmente 36 unterteilt.

Die Ringsegmente 36 des Fortsatzes 34 begrenzen zusammen mit dem Lagerring-Absatz 37 einerseits und der Wellen-Stirnseite 23 andererseits den als eine Außen-Umfangsnut 26 gestalteten Verteilkanal 25, wobei die Radialschlitze 35 gemäß den Figuren 1 und 2 mit im Lagerring 16 gebohrten Verbindungskanälen 27 oder in die Lagerfläche genuteten Verbindungskanälen 28 in mediumsführender Verbindung stehen, und im Beispiel der Figur 3 mit in die Lagerbuchse 18 genuteten Verbindungskanälen 29 zusammenwirken. Zur Vermeidung von Druckverlusten durch hohe Leckage ist der Wellen-Endabschnitt 21 jenseits der durch aneinander grenzende Bauteile 16 und 21 gebildeten Umfangsnut 26 ebenfalls mit einem Dichtring 33 ausgerüstet.

Das Ausführungsbeispiel nach Figur 4 unterscheidet sich von den vorstehend beschriebenen Ausführungen dadurch, daß der mit der Abdeckung 32 vorrichtungsseitig etwa bündig begrenzte Wellen-Endabschnitt 21 die lagerringnah angeordnete Außen-Umfangsnut 26 aufweist, die über umfänglich verteilt angeordnete Durchbrüche 38 mit einem in der Zentrier-Verlängerung 19 der Lagerbuchse 18 ausgebildeten ersten Ringkanal 39 zu in der Lagerbuchse 18 gebohrten Verbindungskanälen 30 in Verbindung steht, und die Verbindungskanäle 30 über einen zweiten Ringkanal 40 mit in die Druckkammer 31 führenden Übertrittsbohrungen 41 in dem stirnseitig an die Nockenwelle 11 bzw. deren Endabschnitt 21 anschlagenden Lagerring 16 zusammenwirken.

Zur genauen Steuerung oder Regelung der jeweils in den Figuren 1 bis 4 gezeigten Stellvorichtung 10 ist der Verstellkolben 15 beidseitig hydraulisch beaufschlagbar. Für die hierfür erforderlichen Hydraulikkanäle ist die Stellvorrichtung 10 über eine die Lagerbuchse 18 mit Radialspiel durchsetzende Zentralschraube 17 an der Nockenwelle 11 zentriert gehalten, wobei der mit dem Radialspiel gegebene Ringraum 42 einenends mit einem weiteren im Wellen-Endabschnitt 21 angeordneten, gesondert hydraulisch versorgten Verteilkanal 25' und andemends mit Übertrittskanälen 43 zu einer zur ersten Druckkammer 31 entgegengesetzt am Verstellkolben 15 wirksamen zweiten Druckkammer 44 im Steuergehäuse 14 in Verbindung steht.

## Patentansprüche

1. Stellvorrichtung zur relativen Winkelverstellung einer angetriebenen Welle, insbesondere Nockenwelle einer Brennkraftmaschine,
- bei der ein antriebseitiger Teil (13) über einen an einem Steuergehäuse (14) mit einem zumindest einseitig hydraulisch beaufschlagbaren Verstellkolben (15) vorgesehenen Lagerring (16) auf einer mit der Welle (11) fluchtend drehfest verbindbaren Lagerbuchse (18) drehwinkelbeweglich angeordnet ist, wobei
- die Welle (11) im lagerbuchsenseitigen Endabschnitt (21) zumindest einen mit einer steuerbaren Hydraulikleitung (24) verbundenen Verteilkanal (25) umfaßt,
dadurch gekennzeichnet,
- daß die Lagerbuchse (18) mittels einer Verlängerung (19) in einer zentrischen Aufnahme (20) im Endabschnitt (21) der Welle (11) zentriert angeordnet ist und
- der einerseits auf der Lagerbuchse (18) axial gesicherte Lagerring (16) andererseits gegen die Stirnseite (23) des Wellen-Endabschnittes (21) anschlägt, wobei
- der Verteilkanal (25) als eine dem Lagerring (16) im Wellen-Endabschnitt (21) benachbart angeordnete, umlaufende Nut (26) gestaltet ist, die
- über im Lagerring (16) und/oder in der Lagerbuchse (18) angeordnete Verbindungskanäle (27, 28, 29, 30) mit einer vom Verstellkolben (15) begrenzten Druckkammer (31) in Verbindung steht.

2. Stellvorrichtung nach Anspruch 1, dadurch gekennzeichnet,
- daß der Lagerring (16) abschnittsweise eine den Wellen-Endabschnitt (21) umschließende Abdeckung (32) untergreift und
- über einen im Durchmesser abgesetzten Fortsatz (34) gegen die Wellen-Stirnseite (23) anschlägt, wobei
- der mittels Radialschlitze (35) in Ringsegmente (36) unterteilte Fortsatz (34) zusammen mit dem Lagerring-Absatz (37) einerseits und der Wellen-Stirnseite (23) andererseits den als eine Umfangsnut (26) gestalteten Verteilkanal (25) begrenzt,und
- die Radialschlitze (35) mit im Lagerring (16) und/oder in der Lagerbuchse (18) gebohrten und/oder genuteten Verbindungskanälen (27, 28, 29) in mediumsführender Verbindung stehen.

3. Stellvorrichtung nach Anspruch 1 und 2, dadurch gekennzeichnet,
- daß der Lagerring (16) in dem die Abdeckung (32) untergreifenden Abschnitt mit einem Dichtring (33) ausgerüstet ist und
- daß der Wellen-Endabschnitt (21) jenseits der Umfangsnut (26) ebenfalls mit einem Dichtring (33) ausgerüstet ist.

4. Stellvorrichtung nach Anspruch 1, dadurch gekennzeichnet,
- daß der mit der Abdeckung (32) vorrichtungsseitig etwa bündig begrenzte Wellen-Endabschnitt (21) den lagerringnah angeordnete und als Außen-Umfangsnut (26) gestalteten Verteilkanal (25) aufweist, der
- über umfänglich verteilt angeordnete Durchbrüche (38) mit einem in der Zentrierverlängerung (19) der Lagerbuchse (18) ausgebildeten ersten Ringkanal (39) zu in der Lagerbuchse (18) gebohrten Verbindungskanälen (30) in Verbindung steht, und
- die Verbindungskanäle (30) über einen zweiten Ringkanal (40) mit Übertrittsbohrungen (41) in dem stirnseitig an die Welle (11) anschlagenden Lagerring (16) zusammenwirken.

5. Stellvorrichtung nach einem oder mehreren der Ansprüche 1 bis 4, dadurch gekennzeichnet,
- daß die Stellvorrichtung (10) über eine die Lagerbuchse (18) mit Radialspiel durchsetzende Zentralschraube (17) an der Welle (11) zentriert gehalten ist, wobei
- der mit dem Radialspiel gegebene Ringraum (42) einenends mit einem weiteren im Wellen-Endabschnitt (21) angeordneten Verteilkanal (25') und
- andemends mit Übertrittskanälen (43) zu einer zur ersten Druckkammer (31) entgegengesetzt am Verstellkolben (15) wirksamen zweiten Druckkammer (44) im Steuergehäuse (14) in Verbindung steht.

## Claims

1. An adjusting device for adjusting the relative angle of a driven shaft, especially a camshaft of an internal combustion engine,
- wherein a drive-side part (13) is disposed at a movable angle of rotation on a bearing bush (18) for non-rotatably connecting flush with a shaft (11), via a ring bearing (16) on a control casing (14) provided with an adjusting piston (15) hydraulically actuated at at least one end, wherein
- the shaft (11) in the end portion (21) on the bearing bush side comprises at least one distribution duct (25) connected to a controllable hydraulic line (24),
characterised in that
- the bearing bush (18) has a prolongation (19) centred in a central recess (20) in the end portion (21) of the shaft (11) and
- one end abuts a ring bearing (16) axially secured to the bearing bush (18) whereas the other end abuts the end face (23) of the shaft end portion (21), wherein
- the distribution duct (25) is in the form of a peripheral groove adjoining the ring bearing (16) in the shaft end portion (21) and
- connected to a pressure chamber (31) bounded by the adjusting piston (15) via connecting ducts (27, 28, 29, 30) disposed in the ring bearing (16) and/or in the bearing bush (18).

2. An adjusting device according to claim 1, characterised in that
- parts of the ring bearing (16) engage under a cover (32) surrounding the shaft end portion (21) and
- the ring bearing has a reduced-diameter extension (34) which abuts the shaft end face (23), wherein
- extension (34), which is divided into annular segments (36) by radial slots (35), co-operates with a bearing-ring shoulder (37) on the one hand and the shaft end face (23) on the other hand to bound the distribution duct (25) in the form of a peripheral groove (26), and
- the radial slots (35) are connected for the purpose of conveying medium to connecting ducts (27, 28, 29) drilled and/or in the form of slots in the ring bearing (16) and/or in the bearing bush (18).

3. An adjusting device according to claims 1 and 2, characterised in that
- the portion of the ring bearing (16) engaging under the cover (32) is provided with a sealing ring (33) and
- the shaft end portion (21) is also equipped with a sealing ring (33) on the other side of the peripheral groove (26).

4. An adjusting device according to claim 1, characterised in that
- the shaft end portion (21) which is bounded by and approximately flush with the cover (32) on the apparatus side, comprises the distribution duct (25) in the form of the outer peripheral groove (26) disposed near the ring bearing, the duct
- being connected via peripherally distributed apertures (38) to a first annular duct (39) formed in the central prolongation (19) of the bearing bush (18) and leading to collecting ducts (30) drilled in the bearing bush (18), and
- the connecting ducts (30), via a second annular duct (40), co-operate with overflow bores (41) in the ring bearing (16) abutting the end face of the shaft (11).

5. An adjusting device according to one or more of claims 1 to 4, characterised in that
- the adjusting device (10) is held centred on the shaft (11) via a central screw (17) which extends through the bearing bush (18) with radial clearance, wherein
- the annular space (42) resulting from the radial clearance is connected at one end to an additional distribution duct (25') disposed in the shaft end portion (21) and
- is connected at the other end via overflow ducts (43) to a second pressure chamber (44) in the control casing (14) and operating at the adjustment piston (15) in the opposite direction to the first pressure chamber (31).

## Revendications

1. Dispositif de réglage pour le réglage angulaire (phase) d'un arbre entraîné notamment d'un arbre à cames d'un moteur à combustion interne, avec
- du côté de l'entraînement (13), une bague de palier (16), avec un piston de réglage (15) commandé hydrauliquement par au moins un côté, prévue dans le carter de commande (14), cette bague de palier (16) étant montée mobile en phase sur une douille de palier (18) reliée solidairement en rotation de manière alignée avec l'arbre (11),
- l'arbre (11) comprend dans le segment d'extrémité (21) du côté de la douille de palier, au moins un canal de distribution (25) relié à une conduite hydraulique commandée (24),
caractérisé en ce que
- la douille de palier (18) est centrée dans un logement central (20) du segment d'extrémité (21) de l'arbre (11) par l'intermédiaire d'un prolongement (19),
- la bague de palier (16) fixée axialement d'un côté sur la douille de palier (18) et bute d'autre part contre la face frontale (23) du segment d'extrémité d'arbre (21),
- le canal de distribution (25) étant réalisé comme rainure périphérique (26) prévue dans le segment d'extrémité d'arbre (21) au voisinage de la bague de palier (16),
- par des canaux de liaison (27, 28, 29, 30) prévus dans la bague de palier (16) et/ou dans la douille de palier (18), on réalise une liaison avec une chambre de pression (31) délimitée par le piston de réglage (15).

2. Dispositif de réglage selon la revendication 1, caractérisé en ce que
- la bague de palier (16) vient prendre par segments dans un recouvrement (32) entourant le segment d'extrémité d'arbre (21),
- par un prolongement (34) de diamètre décalé, on bute contre la face frontale d'arbre (23), et
- le prolongement (34) subdivisé en segments annulaires (36) par des fentes radiales (35) avec le prolongement de bague de palier (37) d'une part et la face frontale d'arbre (23) d'autre part, on délimite le canal de distribution (25) en forme de rainure périphérique (26),
- les fentes radiales (35) communiquent pour le passage du fluide, avec des canaux de liaison (27, 28, 29) percés dans la bague de palier (16) et/ou dans la douille de palier (18) ou des canaux de liaison rainurés (27, 28, 29).

3. Dispositif de réglage selon la revendication 1 ou 2, caractérisé en ce que
la bague de palier (16) est équipée d'un joint d'étanchéité (33) pour sa partie venant prendre sous le recouvrement (32) et le segment d'extrémité d'arbre (21) est également muni d'un joint d'étanchéité (33) de l'autre côté de la rainure périphérique (26).

4. Dispositif de réglage selon la revendication 1, caractérisé en ce que
- le segment d'extrémité d'arbre (21) délimité sensiblement à fleur du côté du dispositif avec le recouvrement (32), comporte le canal de distribution (25) prévu à proximité du palier et ayant la forme du canal périphérique extérieur (26), ce canal de distribution étant relié par des passages (38) répartis à la périphérie, avec un premier canal annulaire (39) réalisé dans le prolongement central (19) de la douille de palier (18) vers les canaux de liaison (30) percés dans la douille de palier (18) et
- les canaux de liaison (30) coopèrent par un second canal annulaire (40) avec des perçages (41) et du côté frontal la bague de palier (16) butant contre l'arbre (11).

5. Dispositif de réglage selon l'une ou plusieurs des revendications 1 à 4,
caractérisé en ce que
- le dispositif de réglage (10) est maintenu centré sur l'arbre (11) par une vis centrale (17) traversant la douille de palier (18) avec du jeu radial et
- la rainure annulaire (42) donnée avec du jeu radial communique d'un côté avec un autre canal de distribution (25') prévu dans le segment d'extrémité d'arbre (21), et
- de l'autre côté, elle communique par des canaux de passage (43) avec une seconde chambre de pression (44) prévue dans le carter de commande (14), cette chambre agissant sur le piston de réglage (15) de façon opposée.
